# EUROPEAN PATENT SPECIFICATION

(11) **EP 3 663 377 B1**
(45) Date of publication and mention of the grant of the patent: **05.04.2023**
(21) Application number: 19212343.8
(22) Date of filing: 28.11.2019
(51) Int. Cl.: C09K 11/02

(54) **COLORED LUMINESCENT FILM**
GEFÄRBTER LUMINESZENTER FILM
FILM LUMINESCENT COLORÉ

(30) Priority: 03.12.2018 TW 107143232
(43) Date of publication of application: 10.06.2020
(73) Proprietor: Chance Line Industrial Co., Ltd., Siansi Township, Changhua County (TW)
(72) Inventor: Yao, Ming-Hsien, Siansi Township,Changhua County (TW)
(74) Representative: Lang, Christian

(56) References cited:
- EP-A1- 2 826 836
- WO-A1-2015/187490
- US-A1- 2017 146 702
- US-B2- 6 855 271

## Description

### BACKGROUND OF THE INVENTION

### 1. Field of the Invention

The present invention relates generally to a luminescent product, and more particularly to a luminescent film, which is colored under normal light without affecting the light absorption efficiency and lighting efficiency.

### 2. Description of the Related Art

Recently, modern peoples have more and more nocturnal activities. In consideration of safety, various luminescent products have been developed and widely applied to the human wears. For example, a luminescent product such as a luminescent film can be adhered to a clothes, whereby the luminescent film can emit luminescence at night to enhance the visibility and ensure the security in nocturnal activities. The luminescent product contains luminescent particles.

In the case that a luminescent film is adhered to a clothes, in order to increase the colorful effect provided by the luminescent film for the clothes in the daytime (i. e. under normal light) or in a well illuminated place, a conventional luminescent film has been developed, which can present a different color under normal light, such as yellow, green, pink, etc. Accordingly, the colored luminescent film is adhered to the clothes, whereby in the daylight, the appearance color (yellow, green or pink) of the luminescent film can richen the colorfulness of the clothes. In this case, people not only can see the color of the clothes, but also can see the color of the luminescent film.

In order to manufacture the luminescent film with different colors, conventionally, the luminescent particles are dyed. For example, the luminescent particles are dyed into yellow, green, pink, etc. with a dye. In this case, the luminescent film can present a specific color of the dye in the daytime or in a well illuminated place, while at night or in a dark place, the luminescent particles of the luminescent film will emit luminescence. However, the luminescence emitted from the luminescent film is neither the color of the luminescent particles themselves nor the color of the dye, but a mixed color of the color of the luminescence of the luminescent particles and the color of the dye.

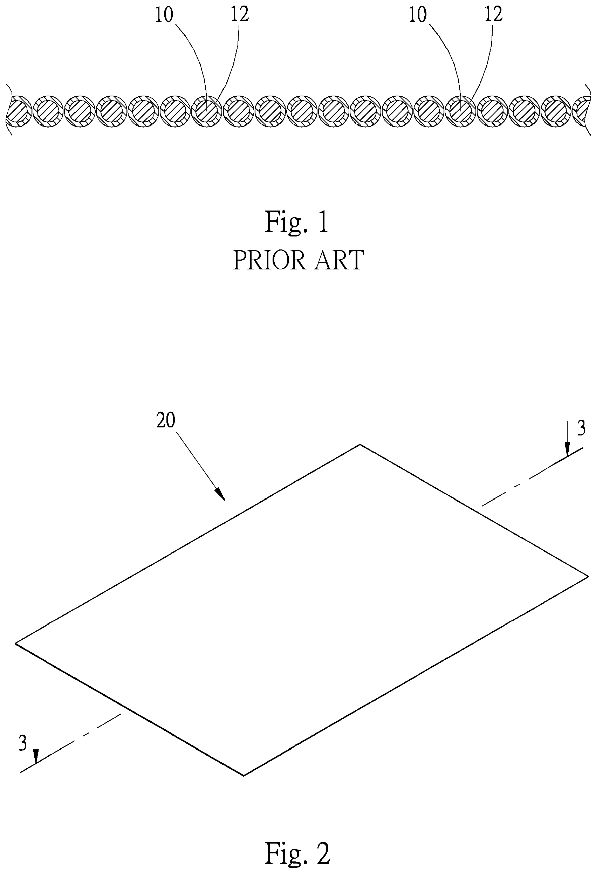

Please refer to Fig. 1. The luminescent particles are dyed in such a manner that the luminescent particles are enclosed by a colored dye 12 such as a green, blue or pink dye. Due to the color of the dye 12 itself, in the daytime or in a well illuminated place, the color of the luminescent film seen by people is exactly the color of the dye.

The luminescent particles emit luminescence on a principle that under sunlight or in a well illuminated place, the luminescent particles will absorb light, while in a dim place or a place without any light source, the luminescent particles will emit luminescence. In the conventional dying method, the luminescent particles are dyed into different colors, however, the luminescent particles 10 are enclosed by the dye 12 so that the luminescent particles 10 are hindered from absorbing the light. As a result, the light absorption efficiency of the luminescent particles is deteriorated. Moreover, the dye 12 will hinder the luminescent particles from emitting luminescence in a dark environment . That is, the dye will block the luminescence emitted from the luminescent particles. Therefore, the brightness of the luminescence emitted from the existent colored luminescent film is poor and the lighting time is short and the luminescence decays fast so that the luminescent efficiency is poor.

Coated luminescent particles as such are known from the prior art. US 6 855 271 B2 discloses a coated phosphor filler, comprising a plurality of individual phosphor filler particles; and a coating layer coated on the phosphor filler particles, wherein the coating layer comprises a plastic substance.

It is therefore tried by the applicant to provide a colored luminescent film to overcome the shortcoming of the conventional colored luminescent film.

### SUMMARY OF THE INVENTION

It is a primary object of the present invention to provide a colored luminescent film, which can emit luminescence with higher brightness. In addition, the colored luminescent film can emit luminescence lastingly and the lifetime of the colored luminescent film is prolonged.

To achieve the above and other objects, the colored luminescent film of the present invention includes: a luminescent layer having multiple microcapsule luminescent granules, each microcapsule luminescent granule having at least one luminescent particle and a coating, the coating enclosing the at least one luminescent particle, the coating being transparent and colorless; and a colored layer having at least one color, the luminescent layer is disposed on a surface of the colored layer.

Accordingly, under normal light, the color of the colored layer is the appearance color of the luminescent film. The coating of the microcapsule luminescent granule is transparent and colorless, whereby the light beam of the light source can penetrate through the coating for the luminescent particles to absorb. Also, the luminescence emitted from the luminescent particles can penetrate through the coating without obstacle. Therefore, the energy storage efficiency of the luminescent film is increased so that the brightness of the luminescence emitted from the luminescent film is enhanced and the lighting time is prolonged.

Furthermore, the luminescent particles of the microcapsule luminescent granules are isolated from outer side so that the luminescent particles are not subject to damage and the lifetime of the luminescent film is prolonged.

The present invention can be best understood through the following description and accompanying drawings, wherein:

### BRIEF DESCRIPTION OF THE DRAWINGS

Fig. 1 is a sectional view showing the luminescent particles of a conventional colored luminescent film;
Fig. 2 is a perspective view of a preferred embodiment of the luminescent film of the present invention;
Fig. 3 is a sectional view taken along line 3-3 of Fig. 2;
Fig. 4 is a high-power enlarged schematic view of the luminescent layer of the preferred embodiment of the luminescent film of the present invention;
Fig. 5 is a sectional schematic view showing one microcapsule luminescent granule of the luminescent film of the present invention; and
Fig. 6 is a view showing that the luminescent film of the present invention is cut or printed into characters or figures.

### DETAILED DESCRIPTION OF THE PREFERRED EMBODIMENTS

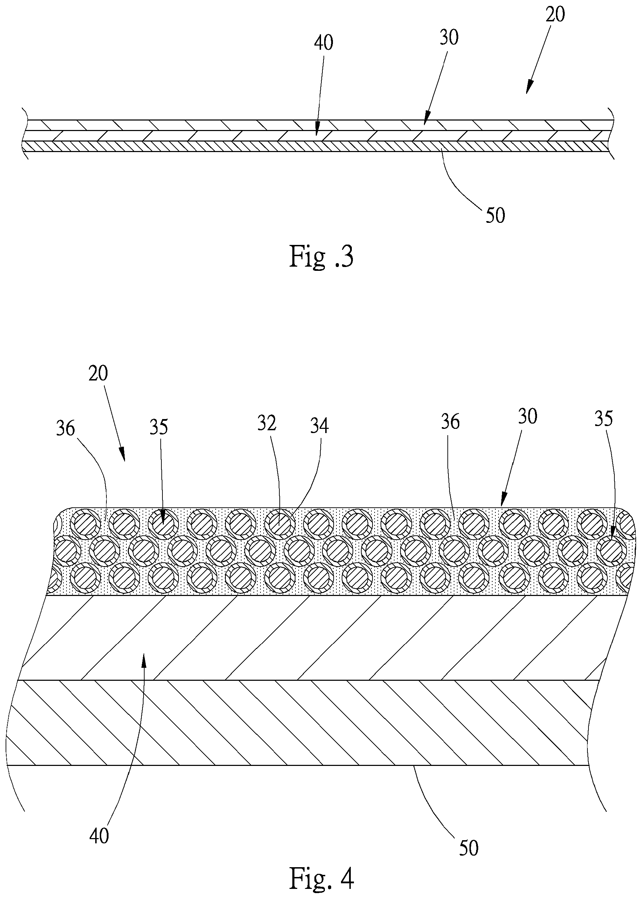

Please refer to Figs. 2 and 3 . The colored luminescent film 20 of the present invention is a film and includes a luminescent layer 30, a colored layer 40 and an adhesive layer 50. The luminescent film 20 can emit luminescence in a place without light, a dark place or a dim place.

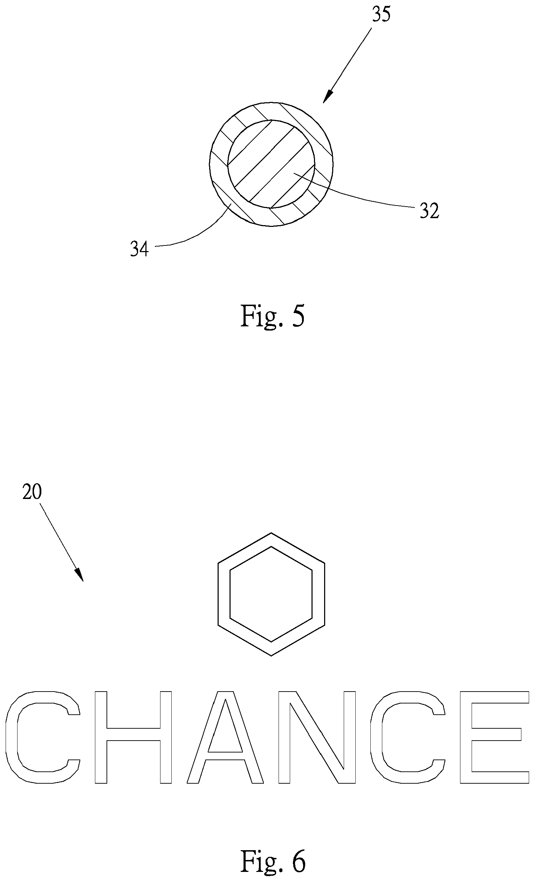

Please refer to Fig. 4. The luminescent layer 30 is formed of a mixture of luminescent particles 32 and mixed liquid of polymer resins. The luminescent particles 32 are fine particles in the form of powders. In this embodiment, the luminescent particles 32 are a product composed of rare earth, alkaline earth aluminate or silicate. The luminescent particles 32 are fine particles with a size ranging from 5µm to 200µm. The luminescent particles 32 themselves can emit light (luminescence). The color of the light emitted from the luminescent particles 32 can be lemon yellow, light yellow, green, grass green, yellow green, blue green, sky blue, purple, etc. Please refer to Figs. 4 and 5. The surfaces of the luminescent particles 32 are coated with transparent resin to form microcapsule structures, (that is, fine luminescent particles capsulated with fine coatings). The transparent resin forms a coating 34 enclosing the respective luminescent particles 32 and fully isolates the luminescent particles 32 from the ambient environment without contacting the ambient environment. Therefore, the luminescent particles 32 are prevented from chemically reacting with water or other materials. For example, the luminescent particles 32 are prevented from contacting water to become strong alkali. (In the case that the luminescent particles become strong alkali, the pH value will reach 11 to hurt the skin. Moreover, in the case that the luminescent particles contact water for a long time, the luminescent particles will lose the luminescent effect). The luminescent particle 32 enclosed with the coating 34 will form a microcapsule luminescent granule 35. It should be noted that since the luminescent particles are so fine that in manufacturing, multiple luminescent particles 32 may be enclosed with a coating 34, therefore, each microcapsule luminescent granule 35 may contain one or more luminescent particles 32. In the present invention, the transparent resin for forming the coating 34 is selectively a resin capable of resisting against potassium chloride, whereby the luminescent particles are prevented from contacting with water to release strong alkali. The transparent resin is colorless so that the coating 34 is transparent and colorless.

A certain amount of microcapsule luminescent granules 35, (that is, the luminescent particles 32 enclosed with the micro-coatings 34) are mixed with a resin 36 to form a mixture, for example, a mixed liquid. The microcapsule luminescent granules 35 are uniformly distributed over the mixed liquid. The mixed liquid is painted to form the luminescent layer 30. The microcapsule luminescent granules 35 are uniformly distributed over the luminescent layer 30. In this embodiment, the resin 36 in the mixed liquid is selectively polyurethane (PU) resin, which is transparent and colorless.

The colored layer 40 is not colorless and has at least one color. The colored layer 40 can be made with different colors as necessary, for example, blue, red, pink, green, yellow, etc. Alternatively, the colored layer 40 can have two or more than two colors. The colored layer is preferably made of polymer material. The luminescent layer 30 is disposed on a surface of the colored layer 40 by means of painting or printing.

The adhesive layer 50 is adhesive and is disposed on the other surface of the colored layer 40.

Figs. 3 and 4 show the structure of a preferred embodiment of the colored luminescent film 20. Please refer to Fig. 6, the luminescent layer 30 is formed by means of painting, the luminescent film 20 can be cut into characters and/or figures. Alternatively, the luminescent layer 30 can be formed by means of printing (such as silk screen printing) and printed into characters and/or figures. The characters and figures of Fig. 6 are only for illustration purposes and not for limiting the scope of the present invention.

In use, by means of the adhesive layer 50, the colored luminescent film 20 is adhered to an article such as a clothes with the luminescent layer 30 facing outer side. When sunlight or other light source is projected onto the luminescent layer 30, the luminescent particles 32 absorb the light and store energy. Thereafter, when the luminescent film 20 is positioned in a dark place, the luminescent particles 32 can emit luminescence.

Under daylight or normal light, people will see the color presented by the colored layer 40 of the luminescent film 20. For example, in the case that the colored layer 40 is pink, the appearance color of the luminescent film 20 is pink and in the case that the colored layer 40 is light green, the luminescent film 20 is light green.

At night, in a place without light or in a dark place, the luminescent particles 32 of the luminescent layer 30 of the luminescent film 20 will emit luminescence. The luminescence has a color, which is the color of the luminescence of the luminescent particle itself. For example, in the case that the luminescent layer 30 is selectively made of luminescent particles with light yellow luminescence, the microcapsule luminescent granules 35 will emit luminescence of light yellow. In the case that the luminescent layer 30 is selectively made of luminescent particles with green luminescence, the luminescent layer 30 will emit luminescence of green. The colored layer 40 will not emit light so that the luminescence emitted from the luminescent layer 30 will not be affected by the colored layer 40.

When the luminescent film 20 is adhered to an article, in the daytime or under normal light, the appearance color of the luminescent film can richen the colorfulness of the article. At night or in a dark place, the luminescent layer 30 of the luminescent film will emit luminescence.

The luminescent particle 32 of the present invention is enclosed with the transparent coating 34, which has low opacity and low light blocking rate, therefore, the permeability and permeation amount of light beam to the coating 34 are increased. In this case, the luminescent particles 32 can more effectively absorb the light and store optical energy. Also, the permeability of the luminescence emitted from the luminescent particles 32 to the coating 34 is increased so that the luminescent particles 32 can more effectively emit luminescence and the brightness of the luminescence emitted from the luminescent particles 32 is enhanced. Therefore, the microcapsule luminescent granules 35 have extremely high luminescence permeability and luminance.

Through the real test of the inventor, it is found that after one hour of use, the luminescent film 20 of the present invention can still emit luminescence with a luminance (or brightness) of 49 mcd (cd: candela). The visible lighting time of the luminescent film 20 is at least four to five hours and generally can last for over 12 hours. The brightness and lighting time of the present invention are both advantageous over the conventional luminescent products. Moreover, the luminescent particles 32 are enclosed with the coating 34 without contacting outer side so that the lifetime of the luminescent layer 30 is longer than that of the conventional products.

The luminescent particles 32 are enclosed with the coating 34 without contacting outer side so that the luminescent particles 32 are prevented from combining with water into strong alkali. Therefore, when the luminescent film of the present invention is adhered to a fabric material, the luminescent film meets the requirement of the fabric material for pH value ranging from 4.5 to 8.5 and will not exceed the required pH value of the fabric material.

In the daytime or under normal light, the color of the colored layer 40 of the present invention is the appearance color of the luminescent film. In addition, the luminescent particles 32 are enclosed with the transparent coating 34 so that the light beam of the light source can penetrate through the coating 34 to be absorbed by the luminescent particles 32. Also, the luminescence emitted from the luminescent particles can penetrate through the coating. Therefore, the energy storage efficiency, (that is, the light absorption efficiency) of the luminescent film 20 of the present invention is effectively increased so that the brightness of the luminescence emitted from the luminescent particles 32 is enhanced and the lighting time is prolonged. The luminescent particles 32 of the microcapsule luminescent granules 35 of the present invent ion are isolated from outer side so that the luminescent particles are not subject to damage and the lifetime of the luminescent film is prolonged.

## Claims

1. A colored luminescent film (20), comprising:
a luminescent layer (30) having multiple microcapsule luminescent granules (35), each microcapsule luminescent granule (35) having one or more luminescent particles (32) and a coating (34), the luminescent particles (32) being made of a material capable of absorbing sunlight or other light source and storing energy and emitting luminescence when positioned in a dark place, wherein the luminescent particles (32) are fine particles with a size ranging from 5 µm to 200 µm, and the coating (34) enclosing the one or more luminescent particles (32), the coating (34) being transparent and colorless and made of a resin capable of resisting against potassium chloride; and
a colored layer (40) having at least one color, the luminescent layer (30) being disposed on a surface of the colored layer (40).

2. The luminescent film (20) as claimed in claim 1, wherein the luminescent layer (30) is a mixture of the microcapsule luminescent granules (35) and a resin (36), the resin (36) of the mixture being transparent and colorless.

3. The luminescent film (20) as claimed in claim 2, wherein the microcapsule luminescent granules (35) are uniformly distributed over the luminescent layer (30).

4. The luminescent film (20) as claimed in claim 2, wherein the luminescent layer (30) is formed by means of painting or printing.

5. The luminescent film (20) as claimed in any one of claims 1 to 4, further comprising an adhesive layer (50) disposed on the other surface of the colored layer (40).

## Patentansprüche

1. Farbige lumineszierende Folie (20), umfassend:
eine Lumineszenzschicht (30) mit vilefachen Mikrokapsel - Lumineszenzkörnchen (35), wobei jedes Mikrokapsel - Lumineszenzkörnchen (35) ein oder mehrere Lumineszenspartikel (32) und eine Beschichtung (34) aufweist, wobei die Lumineszenspartikel (32) aus einem Material hergestellt sind, das in der Lage ist, Sonnenlicht oder eine andere Lichtquelle zu absorbieren und Energie zu speichern und Lumineszenz zu emittieren, wenn es an einem dunklen Ort angeordnet ist, wobei die Lumineszenzpartikel (32) feine Partikel mit einer Größe im Bereich von 5 µm bis 200 µm sind, und die Beschichtung (34) ein oder mehrere Lumineszenzpartikel (32) umschließt, wobei die Beschichtung (34) transparent und farblos ist und aus einem Harz besteht, das gegen Kaliumchlorid beständig ist, und
eine Farbschicht (40) mit mindestens einer Farbe, wobei die Lumineszenzschicht (30) auf einer Oberfläche der Farbschicht (40) angeordnet ist.

2. Lumineszierende Folie (20) nach Anspruch 1, bei welcher die Lumineszenzschicht (30) ein Gemisch aus den Mikrokapsel-Lumineszenzkörnchen (35) und einem Harz (36) ist, wobei das Harz (36) des Gemisches transparent und farblos ist.

3. Lumineszierende Folie (20) nach Anspruch 2, bei welcher die Mikrokapsel-Lumines- zenzgranulate (35) gleichmäßig über die Lumineszenzschicht (30) verteilt sind.

4. Lumineszierende Folie (20) nach Anspruch 2, bei welcher die Lumineszenzschicht (30) durch Bestreichen oder Bedrucken gebildet ist.

5. Lumineszierende Folie (20) nach einem der Ansprüche 1 bis 4, ferner mit einer Klebstoffschicht (50), die auf der anderen Oberfläche der Farbschicht (40) angeordnet ist

## Revendications

1. Film luminescent coloré (20), comprenant :
une couche luminescente (30) présentant de multiples granules luminescents en microcapsule (35), chaque granule luminescent en microcapsule (35) présentant une ou plusieurs particules luminescentes (32) et un revêtement (34), les particules luminescentes (32) étant faites d'un matériau capable d'absorber la lumière du soleil ou une autre source de lumière et de stocker de l'énergie et émettant une luminescence quand elles sont placées dans un endroit sombre, dans lequel les particules luminescentes (32) sont des particules fines ayant une taille allant de 5 µm à 200 µm, et le revêtement (34) renfermant les une ou plusieurs particules luminescentes (32), le revêtement (34) étant transparent et incolore et fait d'une résine capable de résister au chlorure de potassium ; et
une couche colorée (40) présentant au moins une couleur, la couche luminescente (30) étant disposée sur une surface de la couche colorée (40).

2. Film luminescent (20) selon la revendication 1, dans lequel la couche luminescente (30) est un mélange des granulés luminescents en microcapsule (35) et d'une résine (36), la résine (36) du mélange étant transparente et incolore.

3. Film luminescent (20) selon la revendication 2, dans lequel les granulés luminescents en microcapsule (35) sont répartis uniformément sur la couche luminescente (30).

4. Film luminescent (20) selon la revendication 2, dans lequel la couche luminescente (30) est formée au moyen d'une peinture ou d'une impression.

5. Film luminescent (20) selon l'une quelconque des revendications 1 à 4, comprenant en outre une couche adhésive (50) disposée sur l'autre surface de la couche colorée (40).
